# EUROPÄISCHE PATENTSCHRIFT

(11) **EP 1 916 930 B1**
(45) Veröffentlichungstag und Bekanntmachung des Hinweises auf die Patenterteilung: **31.10.2018**
(21) Anmeldenummer: 06764107.6
(22) Anmeldetag: 07.07.2006
(51) Int. Cl.: A47J 43/07

(54) **STABMIXER MIT DURCH EINEN SPANNDECKEL VERBUNDENEN GEHÄUSESCHALEN**
HAND-HELD STICK BLENDER COMPRISING HOUSING SHELLS THAT ARE CONNECTED BY A TENSIONED COVER
MIXEUR PLONGEUR COMPRENANT DES PARTIES DE BOITIER RELIÉES PAR UN COUVERCLE DE SERRAGE

(30) Priorität: 17.08.2005 DE 102005038917
(43) Veröffentlichungstag der Anmeldung: 07.05.2008
(73) Patentinhaber: BSH Hausgeräte GmbH, 81739 München (DE)
(72) Erfinder: SEDOVSEK, Aleksander, 3330 Mozirje (SI); OGRIZEK, Darko, 3320 Velenje (SI); SEMEJA, Uros, 3327 Smartno Ob Paki (SI)
(86) Internationale Anmeldenummer: PCT/EP2006/064007
(87) Internationale Veröffentlichungsnummer: WO 2007/020133

(56) Entgegenhaltungen:
- EP-A2- 0 283 642
- DE-C1- 10 022 131
- DE-U1-202006 020 005

## Beschreibung

Die Erfindung betrifft ein von Hand zu führendes Küchengerät, insbesondere Stabmixer, mit einem Gehäuse umfassend mindestens eine erste und eine zweite Gehäuseschale und ein Befestigungsmittel zur Verbindung der beiden Gehäuseschalen miteinander.

Aus der EP 0 283 642 ist ein Mixgerät, das einen in einem Gehäuse angeordneten Motor zum Antrieb eines Mixstabes aufweist, wobei das Gehäus sich aus Gehäuseteilen ohne Schraub- und Klebeverbindungen zusammensetzen lässt. Hierzu sind die einzelnen Bauteile so untereinander angeordnet und mit Nasen und Vorsprüngen zum gegenseitigen Einhaken bzw. zum Verklipsen ausgestattet, dass nach dem Zusammenbau aller Teile ein fertig montiertes Mixgerät entsteht, das in seiner Außenkontur rundum völlig geschlossen ist. Hierbei werden im Wesentlichen rohrförmige Gehäuseteile mit Hilfe von Haken und entsprechenden Aufnahmen miteinander verbunden, wobei ein Deckel in eine obere Öffnung eines Griffteils eingesetzt und mit den rohrförmigen Gehäuseteilen verrastet wird.

Bei der Herstellung von Küchengeräten ist es von besonderer Bedeutung, die Herstellung und Montage der einzelnen Geräteteile möglichst einfach und effizient zu gestalten, wobei jedoch das Gehäuse das Innere des Küchengeräts möglichst gut vor äußeren Einflüssen schützen soll. Hierfür sind insbesondere Spalte zwischen zwei Gehäuseschalen zu vermeiden. Eine Schwierigkeit bei bekannten Küchengeräten ist, dass aufeinander liegende Gehäuseteile nicht immer spaltfrei verbunden werden konnten, ohne dass eine präzise Positionierung der Gehäuseteile zueinander durchzuführen war. Auch erschweren Fertigungstolleranzen und Ungenauigkeiten der einzelnen Gehäuseteile das Zusammensetzen des Gehäuses, so dass oft ein Nacharbeiten bei unvollständig verschlossenen Gehäusen erforderlich war.

Es ist daher Aufgabe der vorliegenden Erfindung, ein von Hand zu führendes Küchengerät sowie ein Verfahren zur Herstellung eines Küchengeräts bereitzustellen, welches sich auf einfache Weise zügig und abdichtend verschließen lässt.

Diese Aufgabe wird erfindungsgemäß durch das von Hand zu führende Küchengerät sowie das Verfahren zur Herstellung eines Küchengeräts gelöst wie in den unabhängigen Ansprüchen angegeben. Vorteilhafte Ausgestaltungen und Weiterbildungen, wie jeweils angewandt oder beliebig miteinander kombiniert werden können, sind Gegentand der jeweiligen abhängigen Ansprüche.

Das erfindungsgemäße von Hand zu führende Küchengerät, insbesondere Stabmixer, mit einem Gehäuse umfassend mindestens eine erste und eine zweite Gehäuseschale und ein Befestigungsmittel zur Verbindung der beiden Gehäuseschalen miteinander sieht vor, dass das Befestigungsmittel ein Spannelement aufweist, welches an der ersten Gehäuseschale an mindestens zwei separaten Befestigungsstellen eingreift und die erste Gehäuseschale an den beiden Befestigungsstellen gegen die zweite Gehäuseschale drückt.

Im Gegensatz zu üblichen Befestigungsmethoden, bei denen beispielsweise eine Schraube an einer ersten Befestigungsstelle einer ersten Gehäuseschale angreift und diese unter Spannung an eine zweite Gehäuseschale drückt, greift das Spannelement an mindestens zwei separaten Befestigungsstellen an der ersten Gehäuseschale an. Das Spannelement verteilt die Spannkraft auf mindestens zwei separate Befestigungsstellen. Hierdurch wird eine Fixierung der ersten Gehäuseschale an der zweiten Gehäuseschale besonders einfach. Die Kraft zur Verbindung der beiden Gehäuseschalen wird direkt an die Stelle geleitet, wo sie erforderlich ist, um eine spaltfreie Verbindung der Gehäuseschalen miteinander zu bewirken. Das Spannelement weist insbesondere eine Klammerfunktion auf, mit der die beiden Gehäuseschalen zusammengeklammert werden. Das Spannelement wirkt insbesondere als mindestens zweiarmiger Haken, mit dem die erste Gehäuseschale gegen die zweite Gehäuseschale gezogen wird.

Das Küchengerät kann aus zwei oder mehreren Gehäuseschalen zusammengesetzt sein. Das Spannelement kann durch einen, insbesondere von den Gehäuseschalen separaten, Gehäusespanndeckel gebildet sein, der mit den beiden Gehäuseschalen entlang einer zweiten Verbindungslinie spaltfrei verbunden wird. Der Gehäusespanndeckel kann aber auch einstückig mit einer Gehäuseschale sein und an dieser beispielsweise über einen Steg angelenkt sein. Die Gehäuseschalen sind insbesondere halbrohrförmig bzw. etwa zylindersegmentförmig.

Durch die Verwendung des Spannelements wird die Anzahl der Schrauben bzw. Schraubverbindungen, die erforderlich sind, um das Gehäuse spaltfrei und dicht zu verschließen, reduziert. Durch eine entsprechende Anordnung des Spannelements, insbesondere der Ausgestaltung des Spannelements als Gehäusespanndeckel, kann der für übliche Befestigungsmittel erforderliche Raum im Inneren des Gehäuses eingespart werden, wodurch das Küchengerät kompakter und handlicher gestaltet werden kann.

Der Spanndeckel kann die beiden Gehäuseschalen zusammenklammern. Insbesondere wird entlang der zweiten Verbindungslinie eine dichte Verbindung zwischen dem Gehäusespanndeckel und den Gehäuseschalen bewirkt, wodurch ein Eindringen von Schmutz in das Innere des Gehäuses wirksam verhindert wird.

In einer besonders bevorzugten Ausgestaltung der vorliegenden Erfindung weist das Spannelement mindestens ein erstes, ein zweites und ein drittes Verbindungselement auf, wobei das Spannelement mit dem ersten und dem zweiten Verbindungselement an der ersten Gehäuseschale und mit dem dritten Verbindungselement an der zweiten Gehäuseschale befestigt ist.

Das erste und das zweite Verbindungselement können durch einen Verbindungsvorsprung gebildet sein, der an der jeweiligen Gehäuseschale in eine Verbindungsaufnahme eingreift. Durch die Verbindungselemente werden die beiden Gehäuseschalen insbesondere entlang einer durch ihre Ränder gebildeten ersten Verbindungslinie zusammengedrückt, wobei die Kraftwirkung aufgrund der Verbindungselemente direkt an der ersten Verbindungslinie wirkt. Das Spannelement greift somit durch die beiden Verbindungselemente an verschiedenen Befestigungsstellen an der ersten Gehäuseschale an.

Vorteilhafterweise stellt das dritte Verbindungselement eine Schraubverbindung her. Es ist somit an einem einem Werkzeug abgewandten Ende des Küchengeräts nur eine Schraubverbindung erforderlich, um die beiden Gehäuseschalen abdichtend und spaltfrei miteinander zu verbinden. Hierdurch wird insbesondere die Montage des Küchengeräts vereinfacht, da nur eine Schraube angezogen werden muss. Die Qualität der Verbindung zwischen den beiden Gehäuseschalen entspricht jedoch derjenigen, welche mindestens zwei Schraubverbindungen verwendet. Grundsätzlich können noch weitere Verbindungselemente vorgesehen sein, die an der ersten Gehäuseschale angreifen.

Beispielsweise ist ein viertes Verbindungselement am Spannelement vorgesehen, mit dem das Spannelement an der ersten oder der zweiten Gehäuseschale befestigt ist. Durch die Verwendung des Spannelements wird eine Vielpunktbefestigung der Gehäuseschalen miteinander erzielt, ohne dass eine entsprechende Anzahl von Schraubverbindungen erforderlich wäre.

Die beiden Gehäuseschalen können an einer entlang ihren Rändern gebildeten ersten Verbindungslinie mittels einer Gehäusenut und Gehäusefeder miteinander verbindbar sein. Die Gehäusenut greift hierfür in die Gehäusefeder und sorgt somit für eine spaltfreie Abdichtung des zusammengesetzten Gehäuses.

Das Küchengerät ist vorzugsweise elektromotorisch. Es weist einen Antrieb auf und kann insbesondere mit einem Werkzeug verbunden werden. Das Küchengerät ist insbesondere ein Stabmixer. Die Gehäuseschalen können im Wesentlichen Halbschalen sein, d. h. im Wesentlichen zwei Schalen werden zusammengesetzt und bilden ein im Wesentlichen rundum geschlossenes Gehäuse. Der Gehäusespanndeckel ist insbesondere kopfseitig an einem dem Werkzeug entgegengesetzten Ende des Küchengeräts angeordnet.

Die Befestigungsstellen sind insbesondere mindestens 2 cm, insbesondere mindestens 3 cm, vorzugsweise mindestens 4 cm voneinander beabstandet. Durch eine derartige Beabstandung der Befestigungsstellen wird für eine entsprechende Verteilung der Schließkraft zum Schließen des Gehäuses gesorgt.

Das erfindungsgemäße Verfahren zur Herstellung eines Küchengeräts, insbesondere Stabmixer, das eine erste und eine zweite Gehäuseschale und einen Gehäusespanndeckel aufweist, so dass durch die Gehäuseschalen an den Gehäusespanndeckel ein im Wesentlichen geschlossenes Gehäuse gebildet wird, sieht folgende Verfahrensschritte vor: Zusammensetzen der Gehäuseschalen entlang einer durch die Ränder der Gehäuseschalen gebildeten ersten Verbindungslinie; in Eingriff bringen des Gehäusespanndeckels an mindestens zwei separaten Befestigungsstellen an der Gehäuseschale; Zusammenpressen der beiden Gehäuseschalen mit Hilfe des Gehäusespanndeckels derart, dass die erste Gehäuseschale an den beiden Befestigungsstellen gegen die zweite Befestigungsschale gedrückt wird.

Durch das erfindungsgemäße Verfahren wird eine besonders einfache Herstellung eines Küchengeräts ermöglicht, welches das Zusammensetzen des Gehäuses erheblich vereinfacht. Durch das Verfahren werden die einzelnen Gehäuseteile, insbesondere die beiden Gehäuseschalen, mit großer Dichtigkeit aufeinander gepresst, so dass selbst bei bezüglich der Gehäuseteile vergleichsweise großen Fertigungstolleranzen und Ungenauigkeiten ein hohes Maß an Dichtigkeit erzielt wird. Ein aufwändiges Verschließen des Gehäuses wird vereinfacht, obwohl weniger Schraubverbindungen erforderlich sind, um das Gehäuse zu verschließen.

Weitere vorteilhafte Einzelheiten und besondere Ausgestaltungen werden anhand der folgenden Zeichnung, welche die vorliegende Erfindung nicht einschränken, sondern lediglich exemplarisch illustrieren soll, näher erläutert.

Es zeigen schematisch:
- Fig. 1: ein erfindungsgemäßes Küchengerät, welches als Stabmixer ausgestaltet ist, in einer perspektivischen Draufsicht;
- Fig. 2: den Stabmixer nach Fig. 1 in einer perspektivischen Explosionsansicht;
- Fig. 3: das erfindungsgemäße Küchengerät nach Fig. 1 mit einer Ladestation in einer perspektivischen Schrägansicht von schräg oben;
- Fig. 4: das Küchengerät und die Ladestation nach Fig. 3 in einer weiteren perspektivischen Schrägansicht von unten;
- Fig. 5: das erfindungsgemäße Küchengerät nach Fig. 1 in einer Seitenansicht, wobei das Küchengerät in eine Ladestation gestellt ist, die im Querschnitt gezeigt ist;
- Fig. 6: der erfindungsgemäße Stabmixer nach Fig. 2 mit einem geöffneten Gehäusespanndeckel und teilweise ausgeschnittenem Rand in einer perspektivischen Schrägansicht von der Seite;
- Fig. 7: der Stabmixer nach Fig. 6 mit geschlossenem Deckel;
- Fig. 8: eine erfindungsgemäße Ladestation nach Fig. 4 in einer Seitenansicht mit teilweise aufgeschnittenem Ladestationsgehäuse;
- Fig. 9: das Küchengerät und die Ladestation nach Fig. 3 in einer perspektivischen Schrägansicht von schräg oben.

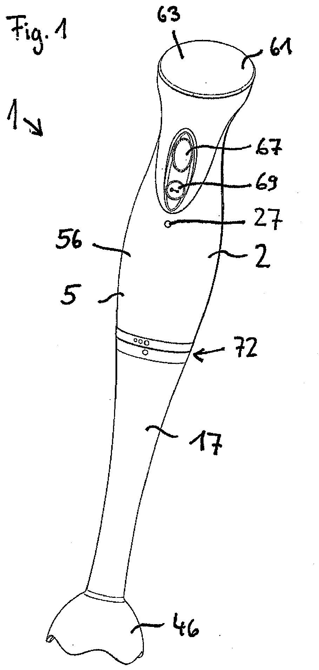

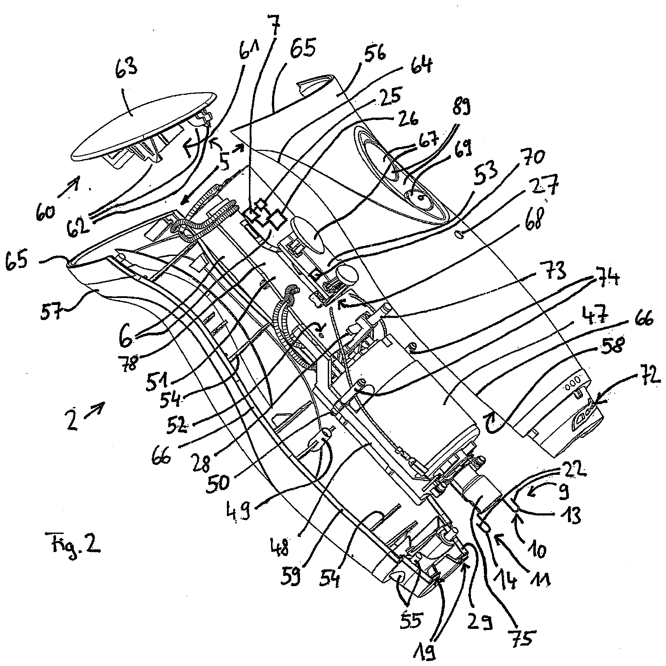

Fig. 1 zeigt ein erfindungsgemäßes Küchengerät 1, welches als Stabmixer 2 ausgestaltet ist. An dem Stabmixer 2 ist ein als Schneid - bzw. Pürrierwerk ausgebildetes Werkzeug 17 mit Hilfe eines Bajonettverschlusses 72 montiert. Das Werkzeug 17 weist einen Werkzeugkopf 46 auf, welcher über entsprechende Messer bzw. Mischelemente (nicht gezeigt) verfügt. Der Stabmixer 2 weist ein Gehäuse 5 mit einer ersten Gehäuseschale 56, einen als Spannelement 61 ausgebildeten Gehäusespanndeckel 63 und eine zweite Gehäuseschale 57 (siehe Fig. 2) auf. Eine Ladezustandsanzeige 27 zeigt an, ob der Stabmixer 2 betriebsbereit ist, insbesondere ob er hinreichend stark aufgeladen ist. Mit Hilfe eines Einschalters 67 wird der Stabmixer 2 in Betrieb genommen. Der Einschalter 67 ist jedoch nur wirksam, wenn er durch einen Sicherheitsschalter 69 entriegelt ist. Durch den von dem Einschalter 67 separaten Sicherheitsschalter 69 wird eine elektrische Verriegelung bewirkt, die den Einschalter 67 erst zeitverzögert nach Betätigen des Sicherheitsschalters 69 entriegelt bzw. frei gibt. Hierdurch wird sichergestellt, dass der Stabmixer 2 nicht ungewollt in Betrieb genommen wird, wodurch insbesondere auch die Sicherheit in einem Haushalt mit Kindern erhöht wird.

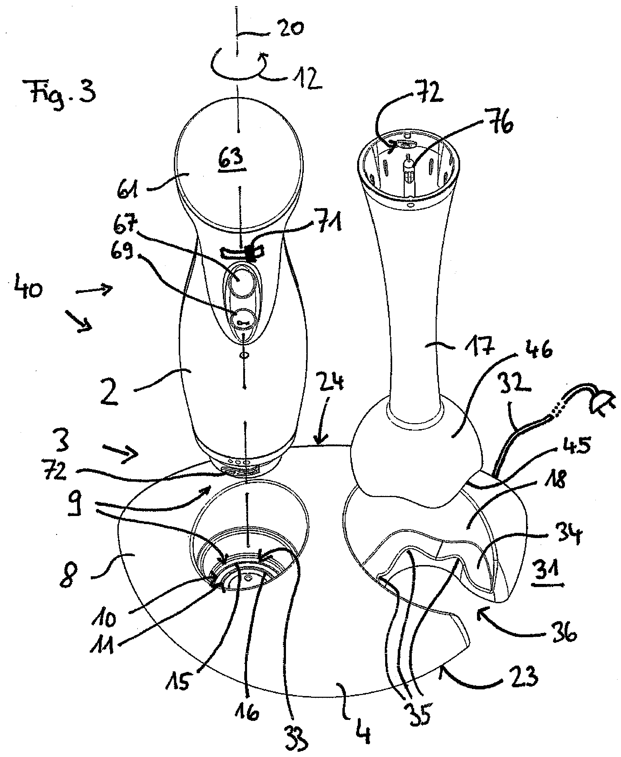

Fig. 2 zeigt einen erfindungsgemäßen Stabmixer 2 in einer perspektivischen Explosionsansicht mit einem Gehäuse 5, welches durch eine erste Gehäuseschale 56, eine zweite Gehäuseschale 57 und einen Gehäusespanndeckel 63 gebildet ist. Das Gehäuse 5 nimmt einen Motor 47, eine Steuerungsselektronik 51 auf einer Platine 78 und einen Akkumulator 6 auf. Der Motor 47, die Platine 78 mit der Steuerungselektronik 51 und der Akkumulator 6 sind auf einem Vormontageträger 48 montiert. Der Motor 47 und der Akkumulator 6 sind an dem in das Gehäuse 5 einsetzbaren Vormontageträger 48 befestigt. Der Vormontageträger 48 ist mit dem Gehäuse 5 klebstofffrei und unverschraubt verbunden. Hierfür weist der Vormontageträger 48 Rastelemente 49, 74 auf, mit denen er an entsprechenden Gegenelementen 50 am Gehäuse 5 beispielsweise durch Anklipsen fixiert ist. Die Steuerungselektronik 51 ist mit Hilfe von ersten Rastmitteln 52 angeklipst. Auch sind ein elektrischer Schalter 67, 69, ein Einschalter 67 und ein Sicherheitsschalter 69, an dem Vormontageträger 48 mit Hilfe von zweiten Rastmitteln 53 angeklipst. Der Motor 47 und der Akkumulator 6 sind an dem Vormontageträger 48 angeklipst. Durch die Vormontagefähigkeit und die schraubenfreie Verbindbarkeit der einzelnen Komponenten kann die Herstellung des Stabmixers 2 erheblich vereinfacht und preisgünstiger gestaltet werden. Die beiden Gehäuseschalen 56, 57 sind entlang einer Gehäusenut 58 bzw. Gehäusefeder 59 entlang einer ersten Verbindungslinie 64, welche durch die Ränder 66 der beiden Gehäuseschalen 56, 57 gebildet ist, spaltfrei miteinander verbunden. Der Gehäusespanndeckel 63 wird entlang einer zweiten Verbindungslinie 65 mit den beiden Gehäuseschalen 56, 57 im Wesentlichen spaltfrei verbunden. Der Gehäusespanndeckel 63 dient als Spannelement 61, welches mit Hilfe eines Befestigungsmittels 60 die beiden Gehäuseschalen 56, 57 miteinander verbindet. Das Spannelement 61 greift an der ersten Gehäuseschale 56 an mindestens zwei separaten Befestigungsstellen 62 ein und drückt die erste Gehäuseschale 56 an den beiden Befestigungsstellen 62 gegen die zweite Gehäuseschale 57. Der Vormontageträger 48 mit dem Motor 47 und dem Akkumulator 6 wird mit Hilfe von Stützen 54 in den Gehäuseschalen 56, 57 abgestützt und somit klebstofffrei und ohne Schrauben fixiert. An dem Akkumulator 6 ist eine Sicherheitseinrichtung 7 vorgesehen, welche den Akkumulator 6 gegenüber einem Überdruck, einer Bildung von metallischem Lithium an den Elektroden des Akkumulators 6 oder einer Bildung von Gas im Akkumulator 6 entgegenwirkt. Außerdem sorgt eine Regelungseinrichtung 26 mit einem Temperatursensor 25 dafür, dass der Akkumulator 6 vor übermäßigen Temperaturschwankungen geschützt wird, die eine (zwischenzeitliche oder fortbestehende) Beeinträchtigung der Leistungsfähigkeit des Akkumulators 6 zur Folge haben könnte. Die Regelungseinrichtung 26 kann die Temperatur des Akkumulators 6 auf einen Temperaturbereich regeln. Mit Hilfe der Sicherheitseinrichtung 7 wird ein maximaler Ladestrom bzw. ein maximaler Entladestrom vorgegeben, wodurch die Sicherheit des Lithium - Ionen - Akkumulators 6 erhöht wird. Die Platine 78 ist mit Hilfe von ersten Rastmitteln 52 an dem Vormontageträger 48 befestigt. Ein Einschalter 67 und ein Sicherheitsschalter 69 sind mit Hilfe von zweiten Rastmitteln 53 an der Platine 78 angeklipst. Die erste Gehäuseschale 56 weist im Bereich der Schalter 67, 69 eine mit einer 2K - Technik angespritzte Gummimembran 89 auf, welche die darunter befindlichen Schalter 67, 69 schützt. Der Einschalter 67 wird durch den Sicherheitsschalter 69 entriegelt, indem der Sicherheitsschalter 69 einen kurzen Moment vor dem Einschalter 67 betätigt wird. Hierzu ist eine Zeitintegrationsschaltung 70 vorgesehen, die eine Entriegelung erst mit einer Verzögerung von 0,3 sec zulässt. Der Sicherheitsschalter 69 und die Zeitintegrationsschaltung 70 bilden eine elektronische Verriegelung 68 für den Stabmixer 2. Der Ladezustand des Akkumulators 6 wird mit Hilfe einer Ladezustandsanzeige 27 angezeigt. Die Ladezustandsanzeige 27 weist eine LED-Anzeige 28 auf der Platine 78 auf, deren Licht durch einen Lichtleiter 73 nach außen geleitet wird. Ein Werkzeug 17 (siehe Fig. 3) wird mit Hilfe eines Bajonettverschlusses 72 mit dem Stabmixer 2 verbunden, wobei ein Rotor 75 des Motors 47 mit einer Welle 76 (siehe Fig. 3) des Werkzeugs 17 drehfest verbunden wird. Die beiden Gehäuseschalen 56, 57 werden an dem werkzeugseitigen Ende des Stabmixers 2 mit Hilfe von Schraubbefestigungsmittel 55 miteinander verbunden. Zum Aufladen des Akkumulators 6 sind zwei als Federelemente 22 ausgebildete Schleifkontakte 10, 11, vorgesehen, die jeweils einen Schleifer 13, 14 aufweisen. Mit Hilfe der beiden Schleifkontakte 10, 11 wird eine elektrische Kupplung 9 zur Übertragung von elektrischer Energie von einer Ladestation 8 (siehe Fig. 3) auf den Stabmixer 2 bereitgestellt. Die beiden Schleifer 13, 14 werden mit Hilfe von Durchführungen 19 durch eine Wandung 29 der zweiten Gehäuseschale 47 hindurch geführt.

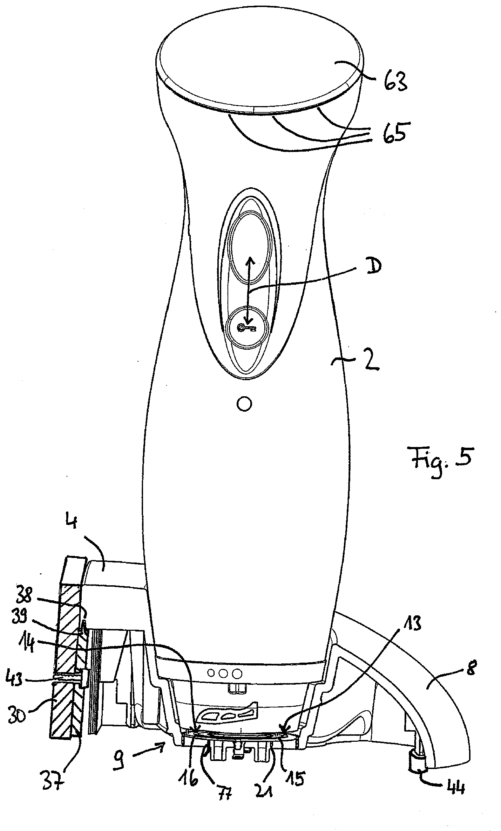

Fig. 3 zeigt den erfindungsgemäßen Stabmixer 2 nach Fig. 2 mit einer Ladestation 8 und einem Werkzeug 17 in einer perspektivischen Schrägansicht von schräg oben. Der Akkumulator 6 betriebene Stabmixer 1 und die Ladestation 8 für den Stabmixer 2 zum Aufladen des Akkumulators 6 bilden ein Ladesystem 3, wobei der Stabmixer 2 während eines Aufladens des Akkumulators 6 mit der Ladestation 8 über eine elektrische Kupplung 9 verbindbar ist. Mit Hilfe der Kupplung 9 wird elektrische Energie von der Ladestation 8 auf den Stabmixer 2 übertragen. Die Kupplung 9 lässt eine Drehung des Stabmixers 2 relativ zur Ladestation 8 zu, so dass der Stabmixer 2 einfach und ohne genaue Ausrichtung seines Drehwinkels 12 relativ zur Ladestation 8 in die Ladestation 8 eingesetzt werden kann. Die Kupplung 9 weist zwei Schleifkontakte 10, 11 mit zwei Schleifern 13, 14 und zwei Schleifringen 15, 16 auf und lässt einen Drehwinkel 12 um mehr als 360° zu. Hierdurch wird ein besonders einfaches Koppeln des Stabmixers 2 mit der Ladestation 8 ermöglicht. Die Schleifringe 15, 16 bilden elektrische Kontaktflächen 33 zur Herstellung eines galvanischen Kontakts des Akkumulators 6 im Stabmixer 2 mit der Ladestation 8. Die Ladestation 8 wird mit einem externen Stromnetz (nicht dargestellt) elektrisch verbunden. Die Ladestation 9 bildet einen Halter 4 für den Stabmixer 2 und kann mit einer Befestigungsfläche 24 an einer Wand 30 (siehe Fig. 5) befestigt bzw. mit Hilfe einer Standfläche 23 auf einer Oberfläche 31 wie z.B. auf eine Küchenplatte gestellt werden. Der Halter 4 weist eine Werkzeugaufnahme 18 für das Werkzeug 17 auf, wofür die Werkzeugaufnahme 18 einen Aufnahmeboden 34 mit Wellungen 35 besitzt, welche der Form des Werkzeugkopfes 46 und dessen Kontur 45 derart angepasst sind, dass ein sicheres Halten des Werkzeuges 17 gewährleistet ist, wenn das Werkzeug 17 in die Werkzeugaufnahme 18 gestellt wird. Wird der Halter 4 an der Wand 30 (siehe Fig. 5) befestigt, kann das Werkzeug 17 auch in die Werkzeugaufnahme 18 eingehängt werden, indem das Werkzeug 17 durch einen radialen Spalt 36 der ringförmigen Werkzeugaufnahme 18 eingeschoben wird. Die Ladestation 8 weist elektrische Leitungen 32 auf, die mit einer externen Stromversorgung (nicht dargestellt) verbunden werden können. Der Stabmixer 2 und das Werkzeug 17 werden mit Hilfe eines Bajonettverschlusses 72 durch Drehung um etwa 120° um eine Längsachse 20 befestigt. Hierbei koppelt eine Welle 76 des Werkzeugs 17 mit dem Rotor 75 (siehe Fig. 2) des Motors 47. Die Leistungsstufe des Stabmixers 2 kann mit Hilfe eines Betätigungsmittels 71 eingestellt werden. Insbesondere kann zwischen verschiedenen Geschwindigkeits- bzw. Leistungsstufen wie z.B. 100 W, 200 W und 300 W gewählt werden. Der multifunktionelle Halter 4 für den Stabmixer 2 und der Stabmixer 2 stellen eine Anordnung 40 dar, die besonders vorteilhaft für den Gebrauch des Stabmixers 2 ist. Insbesondere kann hiermit der Stabmixer 2 auf einfache Weise ohne störendes elektrisches Kabel ergriffen und verwendet werden. Nach Gebrauch kann der Stabmixer 2 schnell und einfach in die Ladestation 8 gestellt werden. Mit Hilfe des Halters 4 kann der Stabmixer 2 sowohl auf eine Oberfläche 31 gestellt werden als auch an einer Wand 30 wie z.B. eine Küchenwand oder eine Schrankwand befestigt werden.

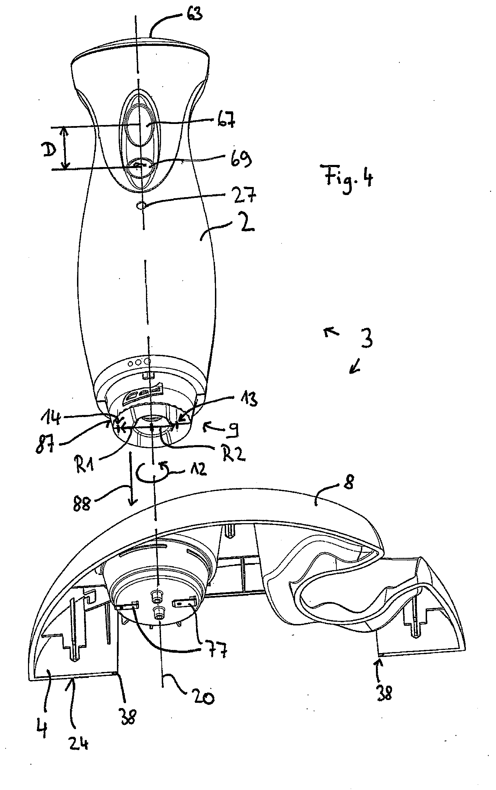

Fig. 4 zeigt einen erfindungsgemäßen Stabmixer 2 mit der Ladestation 8 nach Fig. 3 in einer perspektivischen Schrägansicht. Der Einschalter 67 und der Sicherheitsschalter 69 sind durch einen betätigungswirksamen Abstand D voneinander getrennt. Betätigungswirksam bedeutet hier, dass zwei Finger diesen Abstand D aufweisen müssen, damit die beiden Schalter wirksam betätigt werden können. Hierdurch wird sichergestellt, dass ein Betrieb des Stabmixers 2 nicht durch Zufall oder ungewollt mit einem einzelnen Finger ausgelöst werden kann. Das Ladesystem 3 weist den ersten Schleifer 13 und den zweiten Schleifer 14 auf, die jeweils einen Abstand von der Längsachse 20 besitzen, der dem Radius R1, R2 eines Schleifrings 15, 16 entspricht. Die beiden Schleifringe 15, 16 (siehe Fig. 3) können mit Hilfe von Kontaktbeinen 77 elektrisch kontaktiert werden. Der Halter 4 kann mit Hilfe einer Montageplatte 37 (siehe Fig. 5) an einer Wand 30 gehalten werden. Die Montageplatte 37 wird an dem Halter 4 mittels einer Montagenplattennut 38 befestigt. Der Stabmixer 2 kann aufgrund der 360°-Kupplung 9 mühelos in die Ladestation 8 gestellt werden, ohne dass man eine besondere Aufmerksamkeit auf die Ausrichtung des Stabmixers 2 relativ zur Lagestation 8 richten muss. Mit Hilfe von Führungsflächen 87, die in Bezug auf eine Verkupplungsrichtung 88, entlang derer das Küchengerät 1 in die Ladestation 8 eingeführt und angekoppelt wird, abgeschrägt sind, wird ein Verkuppeln des Küchengeräts 1 mit der Ladestation 8 weiterhin erleichtert. Die Führungsflächen 88 können trichterförmig sein. Mit Hilfe der Führungsflächen 88 wird das Küchengerät 1 an die richtige Position in der Ladestation 8 herangeführt.

Fig. 5 zeigt den erfindungsgemäßen Stabmixer 2 in einer Seitenansicht, wobei das Küchengerät 1 in eine Ladestation 8 gestellt ist, die im Querschnitt gezeigt ist. Hierbei wird die elektrische Kupplung 9 des Stabmixers 2 mit der Ladestation 8 durch den ersten Schleifkontakt 10 mit dem ersten Schleifer 13 und dem ersten Schleifring 15 sowie durch den zweiten Schleifkontakt 11 mit dem zweiten Schleifer 14 und dem zweiten Schleifring 16, hergestellt. Die beiden Schleifringe 15, 16 weisen jeweils Kontaktbeine 77 auf, die von unten elektrisch kontaktiert werden können. Die beiden Schleifringe 15, 16 weisen ebenso Befestigungsbeine 21 auf, die an der Ladestation 8 einen Haken und somit eine sichere Befestigung der beiden Schleifringe 15, 16 herstellen. Der Halter 4 kann mit Gummifüßen 44 auf einer Oberfläche 31 (siehe Fig. 3) stehen. Er kann jedoch auch mit Hilfe der Montageplatte 17, welche durch eine Montageplattennut 38 und eine Montageplattenfeder 39 an dem Halter 4 befestigt ist, mit Hilfe einer Schraube 33 an einer Wand 30 verschraubt werden. Das Gehäuse 5 des Stabmixers 2 wird mit Hilfe eines Gehäusespanndeckels 63 entlang einer zweiten Verbindungslinie 65 an den beiden Gehäuseschalen 56, 57 verbunden.

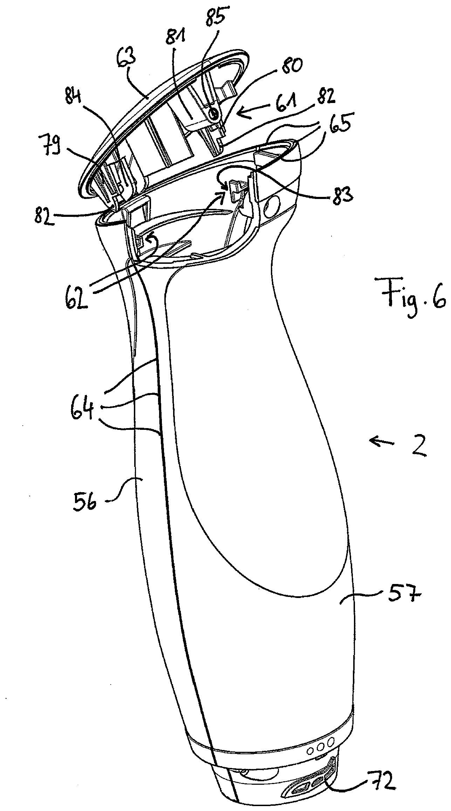

Fig. 6 zeigt den erfindungsgemäßen Stabmixer 2 nach Fig. 1 mit einem geöffnete Spanndeckel 63 und einer teilweise aufgeschnittenen zweiten Gehäuseschale 57. Der Gehäusespanndeckel 63 bildet ein Spannelement 61, durch welches die erste Gehäuseschale 56 mit der zweiten Gehäuseschale 57 derart verklammert wird, so dass eine im Wesentlichen spaltfreie Verbindung zwischen den beiden Gehäuseschalen 56, 57 entlang der ersten Verbindungslinie 64 hergestellt wird. Hierzu greift der Gehäusespanndeckel 63 mit Hilfe eines vierten Verbindungselements 64 in eine entsprechende Aufnahme an der ersten Gehäuseschale 56, und ein erstes Verbindungselement 79 und ein zweites Verbindungselement 80 mit jeweiligen Verbindungsvorsprüngen 82 hintergreifen an zwei separaten Verbindungsstellen 62 in entsprechende separate Verbindungsaufnahmen 83. Ein viertes Verbindungselement 84 greift in eine Deckelaufnahme 46 an der ersten Gehäuseschale 56. Wird der Gehäusespanndeckel 63 mit Hilfe eines dritten Verbindungselements 81 und einer Schraubverbindung 85 an der zweiten Gehäuseschale 57 verbunden, drücken die jeweiligen Vorsprünge 82 die erste Gehäuseschale 56 an den beiden separaten Verbindungsstellen 62 gegen die zweite Gehäuseschale 57. Hierdurch wird ein spaltfreies Verbinden der beiden Gehäuseschalen 56, 57 auch dann bewerkstelligt, wenn Fertigungstoleranzen entlang der ersten Verbindungslinie 64 (z.B. Ungenauigkeiten an der Gehäusenut 58 bzw. an der Gehäusefeder 59 der Gehäuseschalen 56, 57) das Verschließen der beiden Gehäuseschalen 56, 57 erschweren.

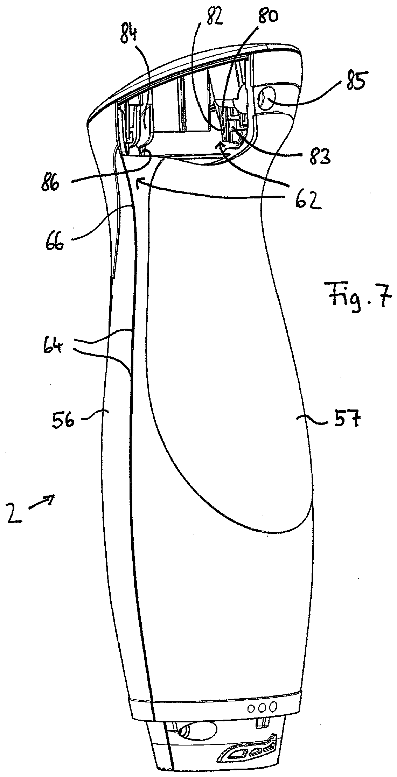

Fig. 7 zeigt den erfindungsgemäßen Stabmixer 2 nach Fig. 6 mit geschlossenem Gehäusespanndeckel 63 in perspektivischer Seitenansicht mit einer teilweisen aufgeschnittenen zweiten Gehäuseschale 57. Man erkennt, dass der Verbindungsvorsprung 82 die Verbindungsaufnahme 83 hintergreift und in der Folge die beiden Ränder 66 der Gehäuseschalen 56, 57 an den beiden Befestigungsstellen 62 zusammengedrückt.

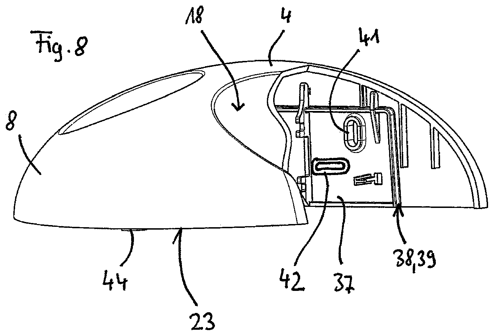

Fig. 8 zeigt den als Ladestation 8 ausgebildeten Halter 4, der teilweise aufgeschnitten ist von der Seite mit der Werkzeugaufnahme 18. Der Halter 4 weist an seiner Standfläche 23 Gummifüße 44 auf. Der Halter kann mit Hilfe der Montageplatte 37 an einer Wand 30 (siehe Fig. 5) befestigt werden. Hierzu dienen erste 41 und zweite 42 Langlöcher, mit denen eine einfache Schraubverbindung an der Wand 30 hergestellt werden kann. Die Langlöcher 41, 42 erlauben ein Ausrichten der Montageplatte 37 in der vertikalen und waagerechten Richtung und ermöglichen somit eine besonders einfache Befestigung des Halters 4 an der Wand 30.

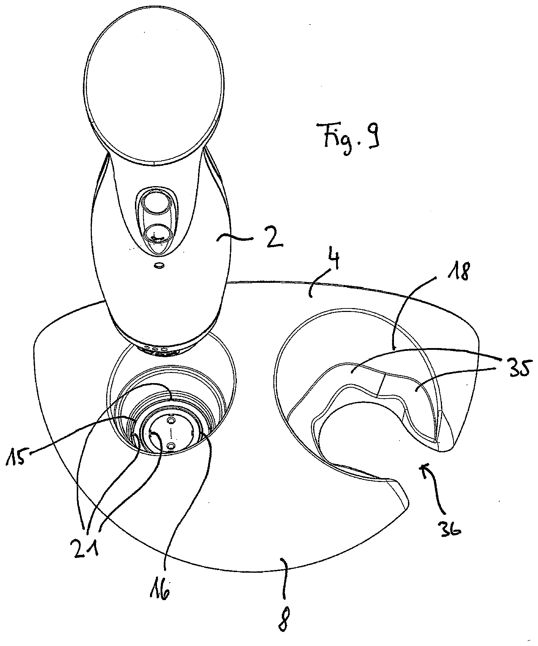

Fig. 9 zeigt den erfindungsgemäßen Stabmixer 2 mit dem als Ladestation 8 ausgestalteten Halter 4 in einer perspektivischen Schrägansicht. Zu erkennen sind die an der Ladestation 8 ausgebildeten Schleifringe 15, 16, die mit Hilfe von Befestigungsbeinen, welche Widerhaken (nicht gezeigt) aufweisen können, an dem Halter 4 befestigt sind. Die Werkzeugaufnahme 18 weist Wellungen 15 auf, welche der Kontur 45 des Werkzeugs 17 derart angepasst sind, dass das Werkzeug 17 sicher in der Werkzeugaufnahme 18 steht. Mit Hilfe des radialen Spalts 36 kann das Werkzeug 17 in die Werkzeugaufnahme 18 eingehängt werden.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:

Ein besonders vorteilhaftes elektromotorisches Küchengerät 1, welches netzunabhängig ist weist einen Lithium-Ionen-Akkumulator 6 oder einen Lithium-Polymer-Akkumulator auf. Der Akkumulator 6 kann eine spezifische Kapazität in einem Bereich von 50 Ah/kg bis 130 Ah/kg, insbesondere von 60 Ah/kg bis 80 Ah/kg, aufweisen. Insbesondere ist eine Sicherheitseinrichtung 7, insbesondere eine Schutzschaltung, für den Akkumulator 6, vorgesehen, wobei vorteilhafterweise die Sicherheitseinrichtung 7 einem übermäßigen Überdruck entgegenwirkt und dafür insbesondere eine Überdruck-Ausblasöffnung aufweist. Auch kann die Sicherheitseinrichtung 7 einen Temperatursensor 20 für den Akkumulator 6 aufweisen. Die Sicherheitseinrichtung kann die Temperatur des Akkumulators 6 regeln. Vorteilhafterweise ist eine elektronische Regelungseinrichtung 26 vorgesehen, die das Laden und Entladen des Akkumulators 6 überwacht und gegebenenfalls den Lade- bzw. Entladestrom begrenzt. Die von dem Akkumulator 6 abgebbare maximale Leistung liegt insbesondere in einem Bereich von 200 W bis 800 W, insbesondere in einem Bereich von 250 W bis 400 W. Das Küchengerät 1 ist insbesondere als Handrührgerät, vorzugsweise als Stabmixer 2, ausgestaltet. In einer speziellen Ausgestaltung ist eine Ladezustandsanzeige 27 für den Akkumulator 6, insbesondere eine LED-Anzeige 28, vorgesehen.

Ein bevorzugtes Ladesystem 3 umfasst ein mit einem Akkumulator 6 betriebenes Küchengerät 1, insbesondere einen Stabmixer 2, und eine Ladestation 8 für das Küchengerät 1 zum Aufladen des Akkumulators 6, wobei zum Aufladen des Akkumulators 6 das Küchengerät 1 mit der Ladestation 8 mittels einer Kupplung 9 verbindbar ist, um elektrische Energie von der Ladestation 8 auf das Küchengerät 1 zu übertragen, wobei die Kupplung 9 eine Drehung des Küchengeräts 1 relativ zur Ladestation 8 zulässt. Die Kupplung 9 lässt vorzugsweise eine Drehung, insbesondere um die Vertikale, um einen Drehwinkel 12 von mehr als 90°, insbesondere mehr als 180°, vorzugsweise um mehr als 360 °, zu. In einer speziellen Ausgestaltung weist die Kupplung 9 mindestens zwei Schleifkontakte 10, 11 mit zwei Schleifern 13, 14 und zwei Schleifringen 15, 16 auf, wobei die beiden Schleifringe 15, 16 konzentrisch angeordnet sein und verschiedene Radien R1, R2 aufweisen können oder die beiden Schleifringe 15, 16 koaxial versetzt angeordnet sein können. Die beiden Schleifringe 15, 16 sind vorteilhafterweise an der Ladestation 8 befestigt sind. Zur Vermeidung einer elektrolytischen Korrosion durch Flüssigkeitsspritzer an der Ladestation können die beiden Schleifringe 15, 16 am Küchengerät 1 befestigt sein. Vorteilhafterweise weist das Küchengerät 1 eine Werkzeugaufnahme 18 für ein Werkzeug 17 auf und die Schleifkontakte 10, 11 für die Kupplung 9 des Küchengeräts 1 sind mit der Ladestation 8 derart an bzw. in der Werkzeugaufnahme 18 angeordnet, dass die Schleifkontakte 10, 11 am Küchengerät 1 durch das Werkzeug 17 am Küchengerät 1 während des Einsatzes des Küchengeräts 1 überdeckt werden. Die Schleifringe 15, 16 sind insbesondere aus einem Blech gestanzt. Ein Schleifring 15, 16 weist vorteilhafterweise mindestens ein zu einer durch den Schleifring 15, 16 gebildeten Ebene abgewinkeltes Kontaktbein 77 auf, das durch eine Durchführung 19 in einer Wandung 29 an dem Küchengerät 1 bzw. an der Ladestation 8 hindurchragt. Ein Schleifring 15, 16 kann mindestens zwei, vorzugsweise mindestens vier, insbesondere zu einer durch den Schleifring 15, 16 gebildeten Ebene abgewinkelte, Befestigungsbeine 21 aufweisen, mit denen der Schleifring 15, 16 befestigt, insbesondere festgeklipst oder eingehakt, ist. Die Ladestation 8 ist vorteilhafterweise durch Spritzgießen hergestellt. Die Schleifer 13, 14 sind vorteilhafterweise als Federelemente 22 ausgebildet und stützen sich im verkoppelten Zustand des Küchengeräts 1 und der Ladestation 8 federnd auf den Schleifringen 15, 16 ab. Vorteilhafterweise sind in Bezug auf eine Verkupplungsrichtung 88 abgeschrägte und/oder gewölbte Führungsflächen 87 am Küchengerät 1 und/oder an der Ladestation 8 vorgesehen zum erleichterten Verbinden des Küchengeräts mit der Ladestation. Die verwendete Ladestation 8 ist geeignet und bestimmt zur Verwendung mit dem Ladesystem.

Ein besonders vorteilhafter multifunktioneller Halter 4 für einen Stabmixer 2 umfasst eine Standfläche 23, mit welcher der Halter 4 auf eine waagerecht ebene Oberfläche 31 gestellt werden kann, und eine Befestigungsfläche 24, mit der der Halter 4 an einer Wand 30 befestigbar ist. Er sieht vorteilhafterweise eine erste Werkzeugaufnahme 18 zum Halten eines Werkzeugs 17, insbesondere eines Rühr- und/oder Pürierwerks, vor. Der Halter 4 weist insbesondere elektrische Leitungen 32 auf und bildet vorteilhafterweise eine Ladestation 8 für einen Akkumulator 6 betriebenen Stabmixer 2. Der Halter 4 kann elektrische Kontaktflächen 33, insbesondere Schleifringe 15, 16 und/oder Schleifer 13, 14, für eine elektrische Kontaktierung des Akkumulator 6 betriebenen Stabmixers 2 aufweisen. Vorteilhafterweise ist die Werkzeugaufnahme 18 so beschaffen, dass Werkzeug 17 in die Werkzeugaufnahme 18 hinein gestellt werden kann, so dass sich insbesondere das Werkzeug 17 im Wesentlichen oberhalb der Werkzeugaufnahme 18 befindet. Alternativ oder zusätzlich kann die Werkzeugaufnahme 18 so beschaffen sein, dass das Werkzeug 17 in die Werkzeugaufnahme 18 eingehängt werden kann, so dass sich insbesondere das Werkzeug 17 im Wesentlichen unterhalb der Werkzeugaufnahme 18 befindet. In einer speziellen Ausgestaltung weist die Werkzeugaufnahme 18 einen Aufnahmeboden 34 auf, der gewellt ist und insbesondere mindestens vier, vorteilhafterweise mindestens fünf, Wellungen 35 aufweist. Die Werkzeugaufnahme 18 kann ringförmig sein, wobei vorteilhafterweise die ringförmige Werkzeugaufnahme 18 einen im Wesentlichen radialen Spalt 36 aufweist, mit dem das Werkzeug 17 in die ringförmige Werkzeugaufnahme 18 eingeschoben werden kann. Die Befestigungsfläche 24 ist vorteilhafterweise als eine am Halter 4 lösbar befestigbare Montageplatte 37 ausgebildet. Die Montageplatte 37 kann so ausgestaltet sein, dass die an dem Halter 4 festgeklipst werden kann. Die Montageplatte 37 kann insbesondere mittels einer Montageplattennut 38 bzw. Montageplattenfeder 39 am Halter 4 eingeschoben und befestigt werden. Von Vorteil ist, wenn die Montageplatte 37 mindestens ein erstes Langloch 41 für eine Befestigung mit einer Schraube 43 an einer Wand 3, aufweist. Von Vorteil ist auch, wenn ein zweites Langloch 42 für eine Befestigung des Halters 4 mit einer Schraube 43 an einer Wand 3 vorgesehen ist, welches insbesondere senkrecht auf dem ersten Langloch 41 steht. Eine weitere Ausgestaltung sieht vor, dass an der Standfläche 23 Gummifüße 44 vorgesehen sind.

Eine besonders vorteilhafte Anordnung umfasst den vorteilhaften Halter und einen Stabmixers 2, der von dem Halter 4 gehalten wird. Die Anordnung kann weiterhin ein Werkzeug 17 für den Stabmixer 2, insbesondere ein Rühr- und/oder Pürierwerk, aufweisen, wobei das Werkzeug 17 mittels einer Werkzeugaufnahme 18 von dem Halter 4 gehalten wird. Es ist von Vorteil, wenn die Werkzeugaufnahme 18 entsprechend der Kontur 45 eines Werkzeugkopfes 46 geformt ist.

Ein besonders vorteilhafter Stabmixer 2 umfasst ein Gehäuse 5 und einen darin befindlichen Motor 47 und einen darin befindlichen Akkumulator 6, und sieht vor, dass der Motor 47 und der Akkumulator 6 an einem in das Gehäuse 5 einsetzbaren Vormontageträger 48 befestigt sind, der an dem Gehäuse 5 befestigt ist. In einer vorteilhaften Ausgestaltung ist vorgesehen, dass der Vormontageträger 48 klebstofffrei und/oder unverschraubt mit dem Gehäuse 5 verbunden ist. In einer vorteilhaften Ausgestaltung ist vorgesehen, dass der Vormontageträger 48 Rastelemente 49, 74 aufweist, mit denen er an entsprechenden Gegenelementen 50 am Gehäuse 5 fixiert, insbesondere angeklipst, ist. In einer vorteilhaften Ausgestaltung ist vorgesehen, dass an dem Vormontageträger 48 eine Steuerungselektronik 51 befestigt, insbesondere mit Hilfe von ersten Rastmitteln 52 angeklipst, ist. In einer vorteilhaften Ausgestaltung ist vorgesehen, dass an dem Vormontageträger 48 elektrische Schalter 67, 69, insbesondere ein Einschalter 67, befestigt, vorzugsweise mit Hilfe von zweiten Rastmitteln 53 angeklipst, ist. In einer vorteilhaften Ausgestaltung ist vorgesehen, dass der Motor 47 und/oder der Akkumulator 6 an dem Vormontageträger 48 angeklipst ist. In einer vorteilhaften Ausgestaltung ist vorgesehen, dass der Vormontageträger 48 aus Kunststoff, insbesondere durch Spritzgießen, hergestellt ist. In einer vorteilhaften Ausgestaltung ist vorgesehen, dass der Vormontageträger 48 in dem Gehäuse 5 mit Hilfe von Stützen 54, insbesondere Stützrippen, gehalten wird. In einer vorteilhaften Ausgestaltung ist vorgesehen, dass das Gehäuse 5 zwei zusammensetzbare Gehäuseschalen 56, 57 aufweist, die insbesondere mittels einer Gehäusenut 58 bzw. Gehäusefeder 59 spaltfrei verbindbar sind. In einer vorteilhaften Ausgestaltung ist vorgesehen, dass der Vormontageträger 48 aus Kunststoff, insbesondere durch Spritzgießen geformt, ist.

Ein besonders vorteilhafter Vormontageträger 48 ist geeignet und bestimmt für den vorteilhaften Stabmixer 2.

Ein besonders vorteilhaftes Verfahren zur Herstellung eines Stabmixers 2 mit einem Gehäuse, einem darin befindlichen Motor 47 und einem darin befindlichen Akkumulator 6, umfasst folgende Verfahrensschritte: Vormontieren des Motors 47 und des Akkumulators 6 an einem Vormontageträger 48; Einbringen des Vormontageträgers 48 mit Motor 47 und Akkumulator 6 in das Gehäuse 5; Schließen des Gehäuses 5. In einer vorteilhaften Ausgestaltung ist vorgesehen, dass der Motor 47 und der Akkumulator 6 an dem Vormontageträger 48 angeklipst werden können. In einer vorteilhaften Ausgestaltung ist vorgesehen, dass der Vormontageträger 48 an dem Gehäuse 5 angeklipst werden kann.

Ein besonders vorteilhaftes von Hand zu führendes Küchengerät 1, insbesondere Stabmixer 2, mit einem Gehäuse 5 umfasst mindestens eine erste 56 und eine zweite 57 Gehäuseschale und ein Befestigungsmittel 60 zur Verbindung der beiden Gehäuseschalen 56, 57 miteinander, und sieht vor, dass das Befestigungsmittel 60 ein Spannelement 61 aufweist, welches an der ersten Gehäuseschale 56 an mindestens zwei separaten Befestigungsstellen 62 eingreift und die erste Gehäuseschale 56 an den beiden Befestigungsstellen 62 gegen die zweite Gehäuseschale 57 drückt. In einer vorteilhaften Ausgestaltung ist vorgesehen, dass das Spannelement 61 durch einen, insbesondere von den Gehäuseschalen 56, 57 separaten, Gehäusespanndeckel 63 gebildet ist, der mit den beiden Gehäuseschalen 56, 57 entlang einer zweiten Verbindungslinie 65 spaltfrei verbunden ist. In einer vorteilhaften Ausgestaltung ist vorgesehen, dass der Spanndeckel 63 die beiden Gehäuseschalen 56, 57 zusammenklammert. In einer vorteilhaften Ausgestaltung ist vorgesehen, dass das Spannelement 61 mindestens ein erstes 79, ein zweites 80 und ein drittes 81 Verbindungselement aufweist, wobei das Spannelement 61 mit dem ersten 79 und zweiten 80 Verbindungselement an der ersten Gehäuseschale 56 und mit dem dritten Verbindungselement 81 an der zweiten Gehäuseschale 57 befestigt ist. In einer speziellen Weiterbildung ist vorgesehen, dass das erste 79 und zweite 80 Verbindungselement durch einen Verbindungsvorsprung 82 gebildet ist, der an der jeweiligen Gehäuseschale 56, 57 in eine Verbindungsaufnahme 83 eingreift. In einer vorteilhaften Ausgestaltung ist vorgesehen, dass das dritte Verbindungselement 82 eine Schraubverbindung 85 herstellt. In einer vorteilhaften Ausgestaltung ist vorgesehen, dass ein viertes Verbindungselement 84 am Spannelement 61 vorgesehen ist, mit dem das Spannelement 61 an der ersten 56 oder der zweiten 57 Gehäuseschale befestigt ist. In einer vorteilhaften Ausgestaltung ist vorgesehen, dass die beiden Gehäuseschalen 56, 57 an einer entlang ihren Rändern 66 gebildeten ersten Verbindungslinie 64 mittels einer Gehäusenut und Gehäusefeder miteinander verbindbar sind. In einer vorteilhaften Ausgestaltung ist vorgesehen, dass die Gehäuseschalen 56, 57 Clipelemente aufweisen, mit denen die Gehäuseschalen 56, 57 miteinander verbindbar sind. In einer vorteilhaften Ausgestaltung ist vorgesehen, dass das Küchengerät 1 elektromotorisch ist, insbesondere ein Stabmixer 2 ist. In einer vorteilhaften Ausgestaltung ist vorgesehen, dass die Gehäuseschalen 56, 57 im Wesentlichen als Halbschalen ausgebildet sind. In einer vorteilhaften Ausgestaltung ist vorgesehen, dass die beiden Befestigungsstellen 62 mindestens 2 cm, insbesondere mindestens 3 cm, vorzugsweise mindestens 4 cm, voneinander beabstandet sind.

Ein besonders vorteilhaftes Verfahren zur Herstellung eines Küchengeräts 1, insbesondere Stabmixer 2, das eine erste 56 und eine zweite 57 Gehäuseschale und einen Gehäusespanndeckel 63 aufweist, so dass durch die Gehäuseschalen 56, 57 und den Gehäusespanndeckel 63 ein im Wesentlichen geschlossenes Gehäuse 5 gebildet wird, sieht folgende Verfahrenschritte vor: Zusammensetzen der beiden Gehäuseschalen 56, 57 entlang einer durch die Ränder 66 der Gehäuseschalen 56, 57 gebildeten ersten Verbindungslinie 64; in Eingriff Bringen des Gehäusespanndeckels 63 an mindestens zwei separaten Befestigungsstellen 62 an der ersten Gehäuseschale 56; Zusammenpressen der beiden Gehäuseschalen 56, 57 mit Hilfe des Gehäusespanndeckels 63 derart, dass die erste Gehäuseschale 56 an den beiden Befestigungsstellen 62 gegen die zweite Gehäuseschale 57 gedrückt wird.

Ein besonders vorteilhaftes elektromotorisches Küchengerät 1, insbesondere ein elektromotorisches Handgerät, vorzugsweise ein Stabmixer 2, mit einem Einschalter 67 sieht vor, dass eine fingerbetätigbare elektrische Verriegelung 68 für den Einschalter 67 vorgesehen ist. Fingerbetätigbar heiß, dass die Verriegelung geeignet und dafür bestimmt ist, manuell durch einen Finger entriegelt zu werden. In einer vorteilhaften Ausgestaltung ist vorgesehen, dass die Verriegelung 68 einen von dem Einschalter 67 separaten Sicherheitsschalter 69 aufweist. In einer vorteilhaften Ausgestaltung ist vorgesehen, dass ein betätigungswirksamer Abstand D zwischen dem Einschalter 67 und dem Sicherheitsschalter 69 mindestens 0,5 cm, insbesondere mindestens 0,8 cm, vorzugsweise mindestens 1,2 cm, beträgt, und insbesondere weniger als 4 cm, insbesondere weniger als 3 cm, vorzugsweise weniger als 2.5 cm, beträgt. In einer vorteilhaften Ausgestaltung ist vorgesehen, dass die Verriegelung 68 eine Zeitintegrationsschaltung 70 aufweist, mit welcher der Einschalter 67 erst zeitverzögert nach Betätigen des Sicherheitsschalters 69 entriegelt wird. In einer vorteilhaften Ausgestaltung ist vorgesehen, dass die Zeitverzögerung der Zeitintegrationsschaltung 70 eine Dauer von mindestens 0.1 s, insbesondere mindestens 0.2 s, vorzugsweise mindestens 0.3 s, hat. In einer vorteilhaften Ausgestaltung ist vorgesehen, dass die Verriegelung 68 eine Zeitintegrationsschaltung 70 aufweist, mit welcher der Einschalter 67 erst zeitverzögert nach Betätigen des Sicherheitsschalters 69 für ein vorgegebenes Zeitfenster entriegelt wird. In einer vorteilhaften Ausgestaltung ist vorgesehen, dass die Dauer des Zeitfensters in einem Bereich von 0.3 s bis 2 s, insbesondere in einem Bereich von 0.5 bis 1 s, liegt. In einer vorteilhaften Ausgestaltung ist vorgesehen, dass ein weiteres elektrisches Betätigungsmittel 71, insbesondere ein elektrischer Stufenschalter, zum Einstellen einer elektrischen Leistungsstufe des Küchengeräts 1 vorgesehen ist, wobei das Betätigungsmittel 71 insbesondere an dem, insbesondere zusammen und in Verbindung mit dem, Einschalter 67 vorgesehen ist. In einer vorteilhaften Ausgestaltung ist vorgesehen, dass der Sicherheitsschalter 69 nur eingeschaltet bleibt, solange er betätigt, insbesondere gedrückt, ist, und sonst wieder ausschaltet.

Ein besonders vorteilhaftes Verfahren zum Ein-/Ausschalten eines Küchengeräts 1, insbesondere elektromotorisches Handgerät, vorzugsweise Stabmixer 2, welches einen Einschalter 67 und einen hierzu separaten Sicherheitsschalter 69 aufweist, wobei der Einschalter 67 entriegelt wird, wenn ein Sicherheitsschalter 69 betätigt wird, sieht vor, dass der Sicherheitsschalter 69 elektronisch schaltet. In einer vorteilhaften Ausgestaltung ist vorgesehen, dass der Einschalter 67 entriegelt wird, wenn der Einschalter 67 erst nach Betätigen des Sicherheitsschalters 69 betätigt wird, insbesondere zeitverzögert um eine Dauer von mindestens 0.1 s, insbesondere mindestens 0.2 s, vorzugsweise mindestens 0.3 s. In einer vorteilhaften Ausgestaltung ist vorgesehen, dass die Entriegelung nur für die Dauer eines vorgegebenen Zeitfensters in einem Bereich von 0.3 s bis 2 s, insbesondere in einem Bereich von 0.5 s bis 1 s, wirksam ist. In einer vorteilhaften Ausgestaltung ist vorgesehen, dass der Einschalter 67 nur während des Haltens des Sicherheitsschalters 69 entriegelt werden kann. In einer vorteilhaften Ausgestaltung ist vorgesehen, dass der Einschalter 67 nach erfolgter Entriegelung auch dann eingeschaltet bleibt, wenn der Sicherheitsschalter 69 nicht mehr gehalten wird.

Die Erfindung betrifft ein von Hand zu führendes Küchengerät 1, insbesondere Stabmixer 2, mit einem Gehäuse 5 umfassend mindestens eine erste 56 und eine zweite 57 Gehäuseschale und ein Befestigungsmittel 60 zur Verbindung der beiden Gehäuseschalen 56, 57 und sieht vor, dass das Befestigungsmittel 60 ein Spannelement 61 aufweist, welches an der ersten Gehäuseschale 56 an mindestens zwei separaten Befestigungsstellen 62 eingreift und die erste Gehäuseschale 56 an den beiden Befestigungsstellen 62 gegen die zweite Gehäuseschale 57 drückt. Das erfindungsgemäße Küchengerät 1 sowie das Verfahren zur Herstellen desselben zeichnen sich durch eine strukturelle Einfachheit aus und bewirken eine gute Abdichtung des Gehäuses 5 trotz Verwendung einer reduzierten Anzahl von Schraubverbindungen.

### Bezugszeichenliste

- 1: Küchengerät
- 2: Stabmixer
- 3: Ladesystem
- 4: Halter
- 5: Gehäuse
- 6: Akkumulator
- 7: Sicherheitseinrichtung
- 8: Ladestation
- 9: Kupplung
- 10: erster Schleifkontakt
- 11: zweiter Schleifkontakt
- 12: Drehwinkel
- 13: erster Schleifer
- 14: zweiter Schleifer
- 15: erster Schleifring
- 16: zweiter Schleifring
- 17: Werkzeug
- 18: Werkzeugaufnahme
- 19: Durchführung
- 20: Längsachse
- 21: Befestigungsbeine
- 22: Federelemente
- 23: Standfläche
- 24: Befestigungsfläche
- 25: Temperatursensor
- 26: Regelungseinrichtung
- 27: Ladezustandsanzeige
- 28: LED-Anzeige
- 29: Wandung
- 30: Wand
- 31: Oberfläche
- 32: elektrische Leitungen
- 33: Kontaktflächen
- 34: Aufnahmeboden
- 35: Wellungen
- 36: radialer Spalt
- 37: Montageplatte
- 38: Montageplattennut
- 39: Montageplattenfeder
- 40: Anordnung
- 41: erstes Langloch
- 42: zweites Langloch
- 43: Schraube
- 44: Gummifüße
- 45: Kontur
- 46: Werkzeugkopf
- 47: Motor
- 48: Vormontageträger
- 49: Rastelemente
- 50: Gegenelemente
- 51: Steuerungselektronik
- 52: erste Rastmittel
- 53: zweite Rastmittel
- 54: Stützen
- 55: Schraubbefestigungsmittel
- 56: erste Gehäuseschale
- 57: zweite Gehäuseschale
- 58: Gehäusenut
- 59: Gehäusefeder
- 60: Befestigungsmittel
- 61: Spannelement
- 62: Befestigungsstellen
- 63: Gehäusespanndeckel
- 64: erste Verbindungslinie
- 65: zweite Verbindungslinie
- 66: Ränder
- 67: Einschalter
- 68: elektrische Verriegelung
- 69: Sicherheitsschalter
- 70: Zeitintegrationsschaltung
- 71: Betätigungsmittel
- 72: Bajonettverschluss
- 73: Lichtleiter
- 74: Rastelement
- 75: Rotor
- 76: Welle
- 77: Kontaktbein
- 78: Platine
- 79: erstes Verbindungselement
- 80: zweites Verbindungselement
- 81: drittes Verbindungselement
- 82: Verbindungsvorsprung
- 83: Verbindungsaufnahme
- 84: viertes Verbindungselement
- 85: Schraubverbindung
- 86: Deckelaufnahme
- 87: Führungsfläche
- 88: Verkupplungsrichtung
- 89: Gummimembran

- D: betätigungswirksamer Abstand
- R1: Radius des ersten Schleifrings 15
- R2: Radius des zweiten Schleifrings 16

## Patentansprüche

1. Von Hand zu führendes Küchengerät (1), insbesondere Stabmixer (2), mit einem Gehäuse (5) umfassend mindestens eine erste (56) und eine zweite (57) Gehäuseschale und ein Befestigungsmittel (60) zur Verbindung der beiden Gehäuseschalen (56, 57) miteinander, wobei das Befestigungsmittel (60) ein Spannelement (61) aufweist, welches an der ersten Gehäuseschale (56) an mindestens zwei separaten Befestigungsstellen (62) angreift und die erste Gehäuseschale (56) an den beiden Befestigungsstellen (62) gegen die zweite Gehäuseschale (57) drückt,
**dadurch gekennzeichnet, dass** das Spannelement (61) durch einen, insbesondere von den Gehäuseschalen (56, 57) separaten, Gehäusespanndeckel (63) gebildet ist, der mit den beiden Gehäuseschalen (56, 57) entlang einer zweiten Verbindungslinie (65) spaltfrei verbunden ist, wobei das Spannelement (61) als mindestens zweiarmiger Haken ausgebildet ist, mit dem die erste Gehäuseschale (56) gegen die zweite Gehäuseschale (57) gezogen wird.

2. Küchengerät (1) nach Anspruch 1, **dadurch gekennzeichnet, dass** der Spanndeckel (63) die beiden Gehäuseschalen (56, 57) zusammenklammert.

3. Küchengerät (1) nach Anspruch 1 oder 2, **dadurch gekennzeichnet, dass** das Spannelement (61) mindestens ein erstes (79), ein zweites (80) und ein drittes (81) Verbindungselement aufweist, wobei das Spannelement (61) mit dem ersten (79) und zweiten (80) Verbindungselement an der ersten Gehäuseschale (56) und mit dem dritten Verbindungselement (81) an der zweiten Gehäuseschale (57) befestigt ist.

4. Küchengerät (1) nach Anspruch 3, **dadurch gekennzeichnet, dass** das erste (79) und zweite (80) Verbindungselement durch einen Verbindungsvorsprung (82) gebildet ist, der an der jeweiligen Gehäuseschale (56, 57) in eine Verbindungsaufnahme (83) eingreift.

5. Küchengerät (1) nach Anspruch 3 oder 4, **dadurch gekennzeichnet, dass** das dritte Verbindungselement (82) eine Schraubverbindung (85) herstellt.

6. Küchengerät (1) nach einem der Ansprüche 3 bis 5, **dadurch gekennzeichnet, dass** ein viertes Verbindungselement (84) am Spannelement (61) vorgesehen ist, mit dem das Spannelement (61) an der ersten (56) oder der zweiten (57) Gehäuseschale befestigt ist.

7. Küchengerät (1) nach einem der vorherigen Ansprüche, **dadurch gekennzeichnet, dass** die beiden Gehäuseschalen (56, 57) an einer entlang ihren Rändern (66) gebildeten ersten Verbindungslinie (64) mittels einer Gehäusenut und Gehäusefeder miteinander verbindbar sind.

8. Küchengerät (1) nach einem der vorherigen Ansprüche, **dadurch gekennzeichnet, dass** die Gehäuseschalen (56, 57) Clipelemente aufweisen, mit denen die Gehäuseschalen (56, 57) miteinander verbindbar sind.

9. Küchengerät (1) nach einem der vorherigen Ansprüche, **dadurch gekennzeichnet, dass** das Küchengerät (1) elektromotorisch ist, insbesondere ein Stabmixer (2) ist.

10. Küchengerät (1) nach einem der vorherigen Ansprüche, **dadurch gekennzeichnet, dass** die Gehäuseschalen (56, 57) im Wesentlichen als Halbschalen ausgebildet sind.

11. Küchengerät (1) nach einem der vorherigen Ansprüche, **dadurch gekennzeichnet, dass** die beiden Befestigungsstellen (62) mindestens 2 cm, insbesondere mindestens 3 cm, vorzugsweise mindestens 4 cm, voneinander beabstandet sind.

12. Verfahren zur Herstellung eines Küchengeräts (1) nach Anspruch 1, insbesondere Stabmixer (2), das eine erste (56) und eine zweite (57) Gehäuseschale und einen Gehäusespanndeckel (63) aufweist, so dass durch die Gehäuseschalen (56, 57) und den Gehäusespanndeckel (63) ein im Wesentlichen geschlossenes Gehäuse (5) gebildet wird, **gekennzeichnet durch** folgende Verfahrenschritte:
- Zusammensetzen der beiden Gehäuseschalen (56, 57) entlang einer durch die Ränder (66) der Gehäuseschalen (56, 57) gebildeten ersten Verbindungslinie (64);
- in Eingriff Bringen des Gehäusespanndeckels (63) an mindestens zwei separaten Befestigungsstellen (62) an der ersten Gehäuseschale (56);
- Zusammenpressen der beiden Gehäuseschalen (56, 57) mit Hilfe des Gehäusespanndeckels (63) derart, dass die erste Gehäuseschale (56) an den beiden Befestigungsstellen (62) gegen die zweite Gehäuseschale (57) gedrückt wird.

## Claims

1. Hand-held kitchen appliance (1), in particular a stick blender (2), comprising a housing (5) with at least one first (56) and one second (57) housing shell and a fixing means (60) for connecting the two housing shells (56, 57) to each other, wherein the fixing means (60) has a clamping element (61), which engages on the first housing shell (56) on at least two separate fixing points (62) and presses the first housing shell (56) against the second housing shell (57) at the two fixing points (62), **characterised in that** the clamping element (61) is formed by a housing clamping cover (63) which is in particular separate from the housing shells (56, 57) and is connected to the two housing shells (56, 57) along a second connecting line (65) in a gap-free manner, wherein the clamping element (61) is embodied as an at least two-armed hook, with which the first housing shell (56) is pulled toward the second housing shell (57).

2. Kitchen appliance (1) according to claim 1, **characterised in that** the clamping cover (63) clamps the two housing shells (56, 57) together.

3. Kitchen appliance (1) according to claim 1 or 2, **characterised in that** the clamping element (61) has at least a first (79), a second (80) and a third (81) connecting element, with the clamping element (61) being fixed to the first (79) and second (80) connecting element on the first housing shell (56) and to the third connecting element (81) on the second housing shell (57).

4. Kitchen appliance (1) according to claim 3, **characterised in that** the first (79) and second (80) connecting elements is formed by a connecting projection (82) which engages on the respective housing shell (56, 57) in a connecting holder (83).

5. Kitchen appliance (1) according to claim 3 or 4, **characterised in that** the third connecting element (82) establishes a screw connection (85).

6. Kitchen appliance (1) according to one of claims 3 to 5, **characterised in that** a fourth connecting element (84) is provided on the clamping element (61), to which the clamping element (61) on the first (56) or the second (57) housing shell is fixed.

7. Kitchen appliance (1) according to one of the preceding claims, **characterised in that** the two housing shells (56, 57) can be connected to each other on a first connecting line (64) formed along their edges (66) by means of a housing groove and a housing spring.

8. Kitchen appliance (1) according to one of the preceding claims, **characterised in that** the housing shells (56, 57) comprise clip elements, with which the housing shells (56, 57) can be connected to each other.

9. Kitchen appliance (1) according to one of the preceding claims, **characterised in that** the kitchen appliance (1) is electromotive, in particular a stick blender (2).

10. Kitchen appliance (1) according to one of the preceding claims, **characterised in that** the housing shells (56, 57) are substantially embodied as half-shells.

11. Kitchen appliance (1) according to one of the preceding claims, **characterised in that** the two fixing points (62) have a distance between each other of at least 2 cm, in particular of at least 3 cm, preferably of at least 4 cm.

12. Method for producing a kitchen appliance (1) according to claim 1, in particular a stick blender (2) having one first (56) and one second (57) housing shell and a housing clamping cover (63) so that the housing shells (56, 57) and the housing clamping cover (63) form a substantially closed housing (5), **characterised by** the following method steps:
- assembly of the two housing shells (56, 57) along a first connecting line (64) formed by the edges (66) of the housing shells (56, 57)
- engagement of the housing clamping cover (63) on the first housing shell (56) on at least two separate fixing points (62)
- pressing together of the housing shells (56, 57) by means of the housing clamping cover (63) in such a way that the first housing shell (56) is pressed against the second housing shell (57) at the two fixing points (62).

## Revendications

1. Appareil de cuisine (1) à guider à la main, en particulier mixeur plongeant (2), avec un boîtier (5) comprenant au moins des première (56) et deuxième (57) coques de boîtier et un moyen de fixation (60) destiné à relier les deux coques de boîtier (56, 57) l'une à l'autre, dans lequel le moyen de fixation (60) présente un élément de serrage (61) qui vient en prise avec au moins deux emplacements de fixation (62) séparés au niveau de la première coque de boîtier (56) et qui presse la première coque de boîtier (56) contre la deuxième coque de boîtier (57) au niveau des deux points de fixation (62),
**caractérisé en ce que** l'élément de serrage (61) est formé d'un bouchon de serrage de boîtier (63), en particulier séparé des coques de boîtier (56, 57), qui est relié sans solution de continuité aux deux coques de boîtier (56, 57) le long d'une deuxième ligne de liaison (65), dans lequel l'élément de serrage (61) est réalisé sous forme de crochet à au moins deux bras grâce auquel la première coque de boîtier (56) peut être attirée contre la deuxième coque de boîtier (57).

2. Appareil de cuisine (1) selon la revendication 1, **caractérisé en ce que** le bouchon de serrage (63) immobilise ensemble les deux coques de boîtier (56, 57).

3. Appareil de cuisine (1) selon la revendication 1 ou 2, **caractérisé en ce que** l'élément de serrage (61) présente au moins des premier (79), deuxième (80) et troisième (81) éléments de liaison, dans lequel l'élément de serrage (61) est fixé à la première coque de boîtier (56) grâce aux premier (79) et deuxième (80) éléments de liaison et est fixé à la deuxième coque de boîtier (57) grâce au troisième élément de liaison (81).

4. Appareil de cuisine (1) selon la revendication 3, **caractérisé en ce que** les premier (79) et deuxième (80) éléments de liaison sont formés d'une saillie de liaison (82) qui vient en prise dans un évidement de liaison (83) au niveau de la coque de boîtier (56, 57) respective.

5. Appareil de cuisine (1) selon la revendication 3 ou 4, **caractérisé en ce que** le troisième élément de liaison (82) crée une liaison vissée (85).

6. Appareil de cuisine (1) selon l'une quelconque des revendications 3 à 5, **caractérisé en ce qu'**un quatrième élément de liaison (84), grâce auquel l'élément de serrage (61) est fixé à la première (56) ou à la deuxième (57) coque de boîtier, est prévu au niveau de l'élément de serrage (61).

7. Appareil de cuisine (1) selon l'une quelconque des revendications précédentes, **caractérisé en ce que** les deux coques de boîtier (56, 57) peuvent être reliées l'une à l'autre au niveau d'une première ligne de liaison (64) formée le long de leurs bords (66) grâce à une rainure de boîtier et une languette de boîtier.

8. Appareil de cuisine (1) selon l'une quelconque des revendications précédentes, **caractérisé en ce que** les coques de boîtier (56, 57) présentent des éléments d'attache par déformation élastique grâce auxquels les coques de boîtier (56, 57) peuvent être reliées l'une à l'autre.

9. Appareil de cuisine (1) selon l'une quelconque des revendications précédentes, **caractérisé en ce que** l'appareil de cuisine (1) est électromotorisé, en particulier est un mixeur plongeant (2).

10. Appareil de cuisine (1) selon l'une quelconque des revendications précédentes, **caractérisé en ce que** les coques de boîtier (56, 57) sont réalisées essentiellement sous forme de demi-coques.

11. Appareil de cuisine (1) selon l'une quelconque des revendications précédentes, **caractérisé en ce que** les deux points de fixation (62) sont espacés l'un de l'autre d'au moins 2 cm, en particulier d'au moins 3 cm, de manière préférée d'au moins 4 cm.

12. Procédé de fabrication d'un appareil de cuisine (1) selon la revendication 1, en particulier d'un mixeur plongeant (2), qui présente des première (56) et deuxième (57) coques de boîtier et un bouchon de serrage de boîtier (63), de sorte qu'un boîtier (5) essentiellement fermé est formé des coques de boîtier (56, 57) et du bouchon de serrage de boîtier (63), **caractérisé par** les étapes de procédé ci-dessous consistant à :
- rassembler les deux coques de boîtier (56, 57) le long d'une première ligne de liaison (64) formée par les bords (66) des coques de boîtier (56, 57) ;
- mettre en prise le bouchon de serrage de boîtier (63) au niveau d'au moins deux points de fixation (62) séparés situés sur la première coque de boîtier (56) ;
- resserrer ensemble les deux coques de boîtier (56, 57) à l'aide du bouchon de serrage de boîtier (63) de telle manière que la première coque de boîtier (56) est pressée contre la deuxième coque de boîtier (57) au niveau des deux points de fixation (62).
